(19) Europäisches Patentamt

European Patent Office

Office européen des brevets

(11) **EP 0 604 446 B1**

(12) **EUROPEAN PATENT SPECIFICATION**

(45) Date of publication and mention
of the grant of the patent:
**01.04.1998 Bulletin 1998/14**

(21) Application number: **92916268.3**

(22) Date of filing: **21.07.1992**

(51) Int. Cl.⁶: $A24B\ 15/24$, $A23F\ 5/26$,
$A23F\ 3/18$, $A23L\ 1/221$,
$A23L\ 1/222$, $A23L\ 1/22$,
$B01D\ 11/02$, $A23L\ 1/212$

(86) International application number:
**PCT/AU92/00368**

(87) International publication number:
**WO 93/01729 (04.02.1993 Gazette 1993/04)**

(54) **EXTRACTION METHOD**

EXTRAKTIONSVERFAHREN

PROCEDE D'EXTRACTION

(84) Designated Contracting States:
**AT BE CH DE DK ES FR GB GR IT LI LU MC NL
SE**

(30) Priority: **22.07.1991 AU 7363/91**

(43) Date of publication of application:
**06.07.1994 Bulletin 1994/27**

(73) Proprietor:
**PROCESSING TECHNOLOGIES
INTERNATIONAL LIMITED
Hamilton HM 12 (BM)**

(72) Inventor: **Lang, Timothy Ralston
Pymble, NSW 2073 (AU)**

(74) Representative:
**Tribe, Thomas Geoffrey et al
F.J. Cleveland & Company
40-43 Chancery Lane
London WC2A 1JQ (GB)**

(56) References cited:
| | |
|---|---|
| WO-A-83/02570 | AU-A- 2 385 877 |
| AU-A- 7 235 881 | DE-A- 1 902 690 |
| DE-A- 2 028 753 | DE-A- 2 056 082 |
| GB-A-  644 483 | GB-A-  914 473 |
| US-A- 2 515 730 | US-A- 3 655 398 |
| US-A- 3 995 067 | |

## Description

The present invention relates to an improved method of counter current extraction of soluble components from a solid.

Counter current extraction is a process known in the food industry for extraction of liquids, solubles and fine particulate matter from associated solids.

One type of counter current extractor comprises a counter-rotating screw conveyor (or multiple screw conveyors) mounted within an inclined or vertical elongate housing which is generally in the form of a trough or totally encased tube. The solid material to be processed is fed into the lower end of the housing and carried upward by a rotating screw while the extracting liquid, for example water, is fed into the top of the housing and flows downward under gravity intimately contacting with the counter flowing solids. Such conditions are ideal for the transfer of soluble compounds from the solid to the liquid phase in accordance with the laws of diffusion.

Despite the efficiency of such processes the liquid product is generally relatively dilute and preparation of a commercially useful concentrate requires solvent removal or extraction. The removal of large volumes of solvent not only increases the time and expense but in some cases has deleterious effects of the product itself. For example, in order to prepare a suitable concentrate of coffee for freeze drying evaporation to achieve a concentration to about 45° BRIX is carried out and results in a great deal of aroma being lost even if low temperature evaporation and essence recovering methods are used.

A different form of prior art extraction process is disclosed in GB 644,483. This patent discloses a batch-type process, in which "counter-current" extraction takes place in a series of extractors. Before extraction the coffee grounds are pre-wetted, using an aqueous liquid, preferably a coffee solution. This is primarily to improve the packing of the ground coffee in the batch-type extractor cells, although improvements to concentration of the end product are also reported.

Similarly, US 3,995,067 discloses use of aqueous coffee extract to pre-wet coffee grounds in batch-type extraction cells. The primary purpose of this invention is to reduce lag-time when a fresh cell of coffee grounds is brought on-line in a counter-current process.

Both GB 644,483 and US 3,995,067 require all of the coffee grounds to be pre-wet with high concentration extract before they enter the extraction zone. This results in relatively large proportions of the soluble coffee being reintroduced into the extraction zone with consequent deleterious effects on the quality of the extract.

It is an object of the invention to overcome, or at least alleviate, one or more of the difficulties related to the prior art.

Accordingly, in a first aspect of the present invention there is provided a process for extraction of a soluble component from a food material which process includes;

providing:

a food material to be extracted;
an extracting liquid; and
an enriching solution of the soluble component to be extracted;
contacting the food material with the enriching solution; and
contacting the enriched food material with the extracting liquid in counter current flow,

characterised in that in said enriching solution the percentage by weight of the soluble component is greater than the percentage by weight of the soluble component in the unextracted food material and the contacting steps are conducted in a counter current extractor (10) including a rotary screw conveyor (12) mounted within an inclined or vertical elongate housing (11) such that the food material is fed into a lower end of the housing to contact the enriching solution which forms a pool at the lower end of the housing, the food material then being carried upward by the rotating screw to contact the extracting liquid which is fed into an upper end of the housing and flows downward under gravity. The process of the present invention includes establishing a pool of a solution at the lower end of the housing, the solution being a concentrated solution of the soluble component.

We have now found that by contacting the solid material with a concentrated solution of the soluble compounds to be extracted a high concentration of soluble compounds may be maintained despite the addition of extracting liquid. The procedure allows concentrated solutions of soluble compound to be continuously prepared even though in many cases the concentration of soluble material in the concentrated solution exceeds the proportion of those compounds in the solid feed which is extracted. The process thus significantly reduces or eliminates the need for evaporation or like concentration techniques, in preparation of liquid extract concentrates.

The food material is preferably a dried food material and preferably one in which cell walls are no longer intact or organised. The food material may be subjected to a crushing or grinding step. Particularly preferred food materials are coffee, tea, tobacco, almond hulls, vanilla and other dried flavour and fragrance materials.

The extracting liquid is preferably water.

The concentration of said soluble component in the enriched solution is preferably greater than that which can be achieved by extraction with the extracting liquid under the same operating conditions.

The concentration of said soluble material in the enriching solution is greater than the concentration of the soluble component in the unextracted food material. Thus the enriching solution is an aqueous solution in which the soluble component is at a greater concentration than in the unextracted food material.

The process of the present invention utilises a counter current extractor comprising a rotary screw conveyor mounted within an inclined or verticle elongate housing and the food material is fed into the lower end of the housing and carried upward by the rotating screw while the extracting liquid is fed into the upper part of the extractor and flows downward under gravity.

The process of the present invention includes establishing a pool of a solution at the lower end of the housing, the solution being a concentrated solution of the soluble component. The food material on entering the extractor passes through the pool of enriching solution. The extracting liquid is added to the remote end of the extractor and flows down under gravity against the counter flowing food material into the pool of concentrated solution.

The counter current extractor used in accordance with the invention may be of the type described in Australian Patent No 543184. Preferably the reversal of the screw conveyer occurs less than every 20 seconds and preferably less than every 15 seconds.

The liquid extract discharged from the counter current extractor may be diverted through an independent heat exchanger and recirculated. Preferably the recycle is taken from a pool of concentrated solution.

It is particularly preferred that the concentration of the pool is greater than the discharge soluble component concentration which may be achieved by operating the extractor under the same conditions without enrichment. For example, where coffee is being extracted the pool of concentrated solution may be established by the addition of a concentrate which may for example be a dried and ground coffee beans, more preferably a freeze dried coffee, or other coffee product commonly referred to as instant coffee, which may be in the form of a concentrated solution. By a single addition of instant coffee to achieve a concentration in the pool of at least 25°BRIX and preferably at least 30°BRIX further extraction occurs enabling liquid having a concentration over 20°BRIX to be continuously achieved. Under conventional techniques it is generally not possible to achieve a concentration of over about 15°BRIX by extracting with water. The limit for counter current extraction without enrichment is about 20°BRIX.

It is generally preferred that the extractor is provided with means for ensuring a predetermined extracting liquid level in the lower region of the housing. Preferably the recycled extracting liquid is taken continuously from a pool of liquid established at the bottom of the machine.

In a preferred embodiment said soluble component is added to said pool of extracting liquid and fresh extraction liquid is continuously introduced. Preferably the concentration of said soluble component in the pool of extracting liquid is greater than the concentration which may be achieved using the extracting liquid under the same conditions.

It is preferred that the temperature of the extracting liquid is in the range of from approximately 50°C to 80°C although higher or lower temperatures may be used if desired.

We have found that there is a significant improvement in the efficiency of extraction, particularly for coffee, when using the method of the invention at a temperature of at least approximately 50°C.

The efficiency of extraction is also determined to some extent by the ratio of the inputs of fresh extracting liquid feed and solid feed. Preferably the ratio of liquid feed to solid feed is in the range of from approximately 1:10 to 10:1.

A more preferred ratio, particularly when the solid hydrates to some extent such as in the use of coffee, is in the range of from approximately 1:1 to 5:1. A ratio of about 3:1 has been found to be particularly suitable for coffee.

Generally it is preferred where liquid is recycled that the recycle rate is greater than half the liquid feed rate and preferably at least the same as the feed rate. Most preferably the recycle is at least twice the liquid feed rate. The product produced by the process of the present invention is an enriched feed.

The invention will now be further described with reference to the drawings in which:-

FIGURE 1 is a schematic diagram of a counter current extractor.
FIGURE 2 is a graph which compares concentration profiles of a counter current extractor operating in accordance with the invention with the corresponding extracting operating without enrichment.

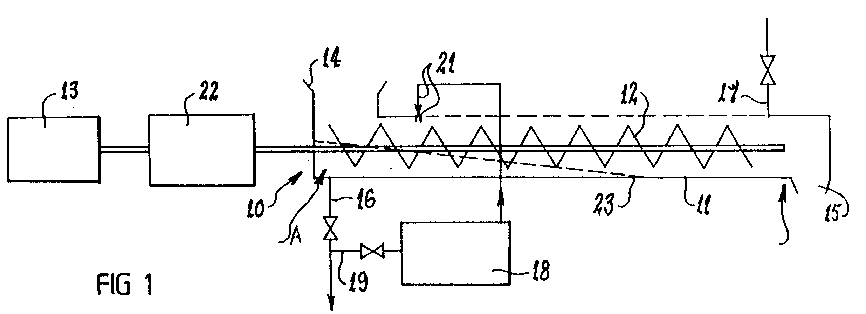

As seen in Figure 1 the counter current extractor 10 comprises an elongate trough shaped housing 11 in which is disposed a screw conveyor 12 which is arranged to be rotated about its longitudinal axis by drive means 13. The housing 11 is provided with an inlet hopper 14 for the introduction of material to be extracted. The hopper 14 is disposed above the lower end of the screw which is inclined slightly upwardly towards an outlet spout 15 for the solid material which has been treated. A discharge line 16 is provided for the discharge of the extracting liquid which is charged into the housing 11 through charging line 17. A heat exchanger 18 is provided on a bypass line 19 to heat discharged liquid and to return it through nozzle 21 to the lower end of the housing 11 to heat the material being treated.

Under operating conditions disclosed in Australian Patent No. 543 184 food material is introduced to the hopper 14 and passes into the lower end of the extractor 10 and is carried by a single screw 12 toward outlet spout 15 where extracted material is deposited. Extracting liquid is introduced through the charging line 17 and flows under gravity toward the end adjacent the hopper 14.

A pool of extracting liquid 23 containing extracted soluble material is maintained at a constant level 23 by drawing off liquid extract. A portion of the liquid extract is recycled via recyle line 19, a heat exchanger 18 and reintroduced through nozzle 21.

When operating using coffee as the food material the extractor may be provided with a heated jacket at about 90°c to provide an extracting liquid temperature of about 50°c.

Under such conditions a steady-state is achieved where a pool concentration of about 12-15° Brix is provided.

In a counter current solid-liquid extractor the concentration of solubles in both the solid and liquid phases will reach a steady-state.

At steady-state the concentration of solubles in the solid phase will exceed the concentration in the liquid phase. This concentration difference provides the driving force to transfer the solubles from the solid to the liquid.

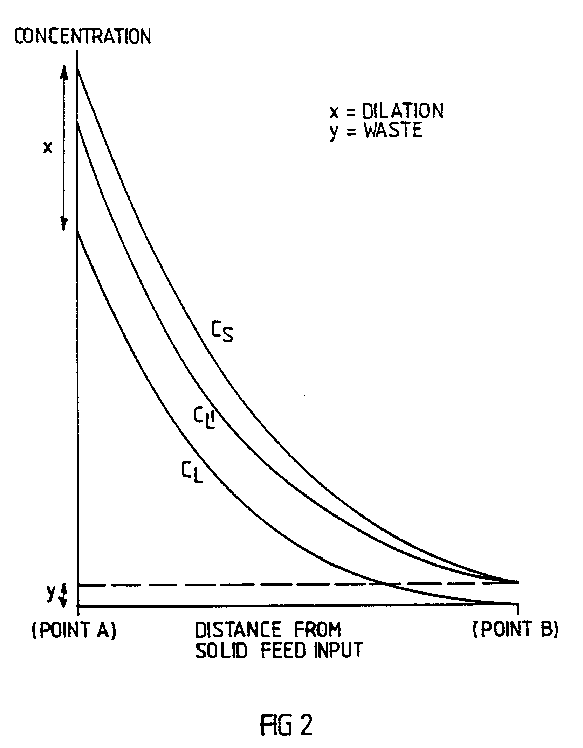

Typical concentration profiles for the solid and liquid phases are shown in Figure 2 where $C_s$ represents a typical concentration profile of solute in the solid phase $C_1$ represents a typical concentration of solute in the liquid phase and $C_1'$ represents a changed concentration profile in the liquid phase brought about by artificially lifting $C_1$ by enrichment at the point of entry of the solid phase of the machine in accordance with the method of the invention. These concentration profiles reflect the laws governing diffusion and mass transfer. For diffusion the material diffused (dm) is determined by the relationship $dm = qDAdt(dc/d_x)$ where $dc/d_x$ is the concentration gradient and for mass transfer the mass transfer ds is provided by the relationship $ds = kAdt(C_s - C_1)$. The efficiency of contacting of the machine is a further limiting factor.

It is to be expected that if a concentration of solubles in the liquid phase was induced to exceed the concentration of solubles in the solid phase, then a condition is established whereby solubles will transfer from the liquid phase back into the solid phase.

In the present invention however when the concentration of solubles in the liquid phase at point A in Figure 1 is raised above the proportion of solubles in the solid phase as a percentage of total weight (for example by addition of a concentrate to the lower end of the machine) suprisingly then that induced high concentration can be maintained or increased even though fresh extracting solvent is introduced.

The waste therefore remains low and dilution is reduced as shown in Figure 2 by comparison of $C_1$ and $C_1'$ profiles.

For example in accordance with the method of the invention a concenctration of liquid extract at least 25° Brix (preferably at least 30° Brix) is continually produced by addition of an instant coffee so that the pool 23 is a concentrated solution of the soluble material. The concentration preferably being at least 25° Brix (more preferably at least 30° Brix).

The method of the invention may involve contacting the coffee with additives. For example enzymes may be used as organic catalysts to enhance extraction of solubles.

The present invention will now be fully described with reference to the accompanying examples. It should be understood, however, that the following description is illustrative only and should not be taken in any way as a restriction on the generality of the invention specified above.

COMPARATIVE EXAMPLE 1

This example demonstrates the use of the apparatus of Australian Patent No 543184 in the extraction of coffee. The disclosure of Australian Patent No 543184 is herein incorporated by reference.

A total of 20kg of coffee was subject to the counter current extraction under the following conditions:

Feed - the coffee, ARABICA 4K coffee from New Guinea was fed into the counter current extractor at a rate of 5.1kg/hour (85g per minute).

Extraction water - water was introduced at the end remote from the end into which the coffee was introduced and was caused to move in counter current to the coffee. The input rate of water was 15kg/hour.

A single screw counter current extractor was used having an angle of inclination of 4° and the screw conveyer was reversed intermittently in accordance with Australian Patent No 543184. The screw conveyer was rotated forward for periods of 10.0 seconds and the reverse direction for periods of 8.2 seconds each at a rate of 3.0 revolutions per second. The residence time of coffee in the counter current extractor was 60 minutes. The temperature of the extractor jacket was set at 90°C and an extraction temperature of 60°C provided in the coffee extraction liquor mixture.

The recycle was run at a slow speed of less than 500g/minute and coffee was introduced at the third flight of the screw to compensate washback.

The total available soluble solids content of the coffee was 25% by weight.

The concentration of the extractant emerging from the extractor was measured as a function of time and is shown in Table 1. A pool of 3 litres of water was used at the base of the machine.

TABLE 1

| Time (minutes) | Dissolved Coffee Concentration (° Brix) |
|---|---|
| 0 | - |
| 30 | - |
| 45 | 6.5 |
| 60 | 7.0 |
| 75 | 7.2 |
| 90 | 9.3 |
| 105 | 11.4 |
| 120 | 12.7 |
| 135 | 13.2 |
| 150 | 13.1 |
| 165 | 12.9 |
| 180 | 13.4 |
| 195 | 13.1 |

EXAMPLE 1

The counter current extractor used in Comparative Example 1 was completely emptied before commencement of the process described in this Example.

The process of Comparitive Example 1 was repeated with the exception that in place of the pool of water at the base of the machine an aqueous solution of "NESCAFE" soluble coffee of concentration 25°Brix was used. The result of the extraction detailing concentration of the extract emerging are at time periods after the commencement is shown in Table 2.

TABLE 2

| Time (minutes) | Concentration of Extract (°Brix) |
|---|---|
| 0 | 25.0 |
| 15 | 24.5 |
| 30 | 25.5 |
| 45 | 25.0 |
| 60 | 24.5 |
| 75 | 24.0 |
| 90 | 25.0 |

The above results show that for the duration of the extraction procedure the extract concentration remained at 25°Brix despite the fact that 20kg of extract water had been added along with the 7.5kg of coffee.

This result is particularly surprising as the relative proportion of water and soluble solids added during the trial was 10% soluble solids 90% water or 10°Brix. To maintain a constant extract Brix of 25° only 7.6kg of water could have exited the machine as extract. It is assumed the balance of 12.4kg and water was absorbed by the cellulosic insoluble fraction of the beans and exited at the top of the machine.

COMPARATIVE EXAMPLE 2

Using the procedure of Comparative Example 1 23.4kg of ground coffee was introduced into the counter current extractor initially at a rate of 50g/min and after 120 minutes at a rage of 60g/min.

Extraction water was introduced at a rate of 180g/min.

The concentration of the extractant emerging from the extractor was measured as a function of time from start up and is shown in Table 3.

TABLE 3

| Time (minutes) | Solid feed rate g/min | Dissolved coffee concentration (°Brix) |
|---|---|---|
| 0 | 50 | - |
| 60 | | 7.5 |
| 75 | | 8.9 |
| 90 | | 9.9 |
| 105 | | 10.3 |
| 120 | 60 | 10.5 |
| 135 | | 10.7 |
| 150 | | 12.5 |
| 165 | | 13.7 |
| 180 | | 15.1 |
| 195 | | 16.4 |
| 210 | | 17.3 |
| 225 | | 17.7 |
| 240 | | 18.1 |
| 255 | | 18.0 |
| 270 | | 18.1 |

The above shows that after a priod of about 240 minutes from the start up a steady state concentration of about 18°Brix had been established.

EXAMPLE 2

Following establishment of steady state in the trial described in Comparative Example 2 instant coffee was added to the pool of water at the base of the machine at the 270 minute time to provide a concentration of dissolved coffee of 30°Brix.

The counter current extractor was not emptied after conducting the procedure described in Comparative Example 2.

The solid feed rate was maintained at 60°g/min. The concentration of the extract was measured at 15 minute intervals and are shown in Table 4.

TABLE 4

| Time (minutes) | Dissolved Coffee concentration (° Brix) |
|---|---|
| 270 | 30.0 |
| 285 | 30.3 |
| 300 | 31.0 |
| 315 | 31.5 |
| 330 | 32.5 |
| 345 | 33.1 |
| 360 | 33.3 |
| 375 | 34.1 |
| 390 | 34.7 |

As shown above the concentration of dissolved coffee rose to 35° Brix in the two hours following enrichment.

EXAMPLE 3

An experiment was performed at the pilot plant of CSIRO in North Ryde, Sydney, to demonstrate the ability to produce highly concentrated coffee extracts when using a counter current extractor (hereinafter "CCE") as the extraction method.

Ground coffee was supplied by Tosoku of Japan. A total of 20 kg was used.

The CCE is a counter current liquid solid extractor which is fully continuous multi-stage and stepless.

Two separate trials were carried out. The operating conditions in each trial were identical in all respects except one.

The aim of the trial was to show that with the change of this one operating condition the concentration of coffee extract could be increased from 10-11° Brix achieved through conventional extraction to over 30° Brix.

The following describes the operation of each run:

RUN 1

Operating Conditions

| | | |
|---|---|---|
| Feed rate | | 75 gm/min |
| Extract in water | | 250 ml/min |
| Temperature | recycle | 84°C |
| | trough | 75°C |
| Angle | | 4° |
| Time forward | | 8 sec |
| Time reverse | | 7 sec |
| Residence time | | 60 mins |
| Pool | | 6 litres inc recycle (water only) |
| RPM | | 2 |
| Operating time | | 150 mins |

Results

| Mass Balance: | | |
|---|---|---|
| In | coffee | 11 kgs |
| | water | 37.5 kg |
| Out | extract | 22.0 kg |
| | coffee | 22.0 kg |
| Balance | | 4.5 kg |
| Waste estimated | | 3.0 kg |
| Error | | 3.5% |

The extract was then concentrated to 33.5% Brix according to the following mass balance

| In | extract | 22 kg at 8.0° Brix |
|---|---|---|
| | concentrate | 4 kg at 33.5 Brix |
| | water | 18 kg |
| | Balance* | 3 kg |

\* Is estimated to have been held-up in the evaporator and losses during screening.

It is important to note that during Run 1 the concentration of soluble coffee in the extract started low (4° to 6° Brix) gradually increased to 10° Brix after 1 hour and stabilised at 10 - 11° Brix for the remainder of the run (i.e. a further 90 minutes).

RUN 2

2 litres of water was added to the concentrated extract from Run 1 resulting in approximately 6 litres at 23.3° Brix. This material was then used as the pool liquid for Run 2. At the commencement of the trial the only difference in operating conditions from Run 1 was the pool at 23.3° Brix compared with pure water in Run 1.

Operating Conditions

| Feed rate | | 80 gm/min |
|---|---|---|
| Extraction water | | 250 ml/min |
| Temperature | recycle | 84°C |
| | trough | 75°C |
| Angle | | 4° |
| Time forward | | 8 sec |
| Time reverse | | 7 sec |
| Residence time | | 60 mins |
| Pool | | 6 litres at 23.3° Brix |
| RPM | | 2 |
| Operating time | | 110 mins |

8

Results

During the first 70 mins of the trial the Brix of the extracted fluctuated between 22.7° and 27.0° Brix with an average of 24.9° Brix even though with the identical operating conditions (excluding pool) Run 1 had produced an extract of 10° Brix.

Over the final 30 mins of the run the feed rate was increased to 160 gms per minute, whilst all other operating conditions remained the same. With this change the Brix of the extract rose to 33.5° Brix and was still rising at the end of the trial. The average Brix of the extract for the final 30 mins was 32.4°.

Separate samples were kept from the first hour and the final 30 minutes.

| Mass Balance: | | | |
|---------------|-----------------|---|------------------------|
| In | Coffee | | 9.6 kg |
| | water | | 22.0 kg |
| Out | extracted coffee | | 23.0 kg |
| | extract | 1 | 5.2 kg at 24.9° Brix |
| | | 2 | 2.3 kg at 32.5° Brix |

CONCLUSIONS

The existence of a pool of concentrated extract of the lower end of the CCE produces a much steeper concentration gradient between the liquid phase and the solid phase along the machine. In particular the concentration of soluble solids at the lower or feed end of the machine can reach 35 to 40° Brix at which point the liquid becomes too viscous to flow properly.

It is hyopthesised that at the feed end a condition is created whereby there is a net water movement from the pool into the ground bean fragment and a net movement of soluble material out of the bean into the pool.

EXAMPLE 4

It can be seen from the preceding example that when 5 gms of coffee is mixed with 20 gms of water at 90°C for 1 minute then 0.4 gms of soluble material is transferred from the coffee to the water and 4.4 gms of water is abasorbed by the coffee. The result of this mass trasfer is 9.0 gms of hydrated coffee and 16 gms of coffee solution in accordance with Mass FLow Diagram 1. These conditions approximate those conditions at the lower end of the CCE during Run 1.

When however 5 gms of coffee are mixed with 21.9 gms of 9.5° Brix coffee solution for 1 minute it can be seen that 0.25 grms of soluble material is transferred fro the coffee to the solution and at the same time 3.95 gms of water is absorbed by the coffee. The result of this mass transfer is 8.7 gms of hydrated coffee and 18.2 gms of soluble coffee solution of 12° Brix in accordance with Mass Flow Diagram 2 (clearly in Run 2 of the pilot side trial the same phenomenon is observed over the range 22° Brix to 32.5° Brix.

Thus by simply creating a pool of high brix coffee extract at the lower end of the CCE a concentration effect is achieved using the coffee itself to remove water.

Such a system can be run in steady state and can be designed to yield 98% of the Total Available Soluble Solids from the coffee.

This method and its preferred embodiment (The CCE) can therefore be used as an adjunct to existing extraction equipment whilst replacing concentration equipment or to partially or totally replace existing extraction technology.

The advantage of the technology is to produce very high strength extracts without the significant loss of volatiles normally occurring during evaporation.

## MASS FLOW DIAGRAM 1

| Coffee 5 gms | |
|---|---|
| Insolubles | 3.75 gm |
| Solubles | 1.25 gm |
| Water | - |

+

| Water 20 gms |
|---|
| |
| |
| |

↓

| Hydrated Coffee 9.0 gms | |
|---|---|
| Insolubles | 3.75 gms |
| Solubles | 0.85 gms |
| Water | 4.4 gms |

+

| Coffee Solution 16.0 gms | |
|---|---|
| Insolubles | - |
| Solubles | 0.4 gms |
| Water | 15.6 gms |

## MASS FLOW DIAGRAM 2

| Coffee 5.0 gms | |
|---|---|
| Insolubles | 3.75 gm |
| Solubles | 1.25 gm |
| Water | - |

+

| Coffee Solution 21.9 gms | |
|---|---|
| Insolubles | - |
| Solubles | 1.9 gms |
| Water | 20.0 gms |

↓

| Hydrated Coffee 8.72 gms | |
|---|---|
| Insolubles | 3.75 gms |
| Solubles | 1.02 gms |
| Water | 3.95 gms |

+

| Concentrated Coffee Solution 18.18 gms | |
|---|---|
| Insolubles | - |
| Solubles | 2.13 gms |
| Water | 16.05 gms |

### EXAMPLE 5

This example aims to determine the distribution of solids during the extraction of coffee in hot water and in a coffee extract.

Five grams of coursely ground coffee was placed in a flask and 20 ml of distilled water were added. The flask was placed in a water bath at 90°C for the predetermined time. The flask was removed and contents screened into a tared moisture dish. The screen was weighed and the wet weight of solids determined. The solids were then washed into another tared moisture dish. The dishes and contents were dried overnight at 100°C in an air oven, cooled, and weighed.

Another experiment was carried out using a coffee extract prepared by boiling a mixture of coffee solids and distilled water for about 30 minutes. The times used were 1, 2 and 10 minutes.

### Results

The weights of the dried extracts are given in Table 5.

TABLE 5

| Extract | Time in Minutes | | |
|---|---|---|---|
| | 1 | 2 | 10 |
| Wt of coffee | 4.997 | 4.000 | 5.005 |
| Wt of wet coffee | 9.0 | 9.7 | 10.0 |
| Wt of dry extract | 0.405 | 0.466 | 0.689 |
| Wt of dry grounds | 4.494 | 4.447 | 4.206 |
| Using 20 ml of coffee extract which contained 1.871 g solids. | | | |
| Wt of coffee | 5.004 | 5.000 | 5.018 |
| Wt of wet coffee | 8.7 | 9.5 | 10.8 |
| Wt of dry extract | 2.127 | 2.206 | 2.284 |
| Wt of dry grounds | 4.673 | 4.570 | 4.536 |

Finally it is to be understood that various other modifications and/or alterations may be made without departing from the spirit of the present invention as outlined above.

**Claims**

1. A process for extraction of a soluble component from a food material which process includes;
    providing:

    a food material to be extracted;
    an extracting liquid; and
    an enriching solution of the soluble component to be extracted;
    contacting the food material with the enriching solution; and
    contacting the enriched food material with the extracting liquid in counter current flow,

    characterised in that in said enriching solution the percentage by weight of the soluble component is greater than the percentage by weight of the soluble component in the unextracted food material and the contacting steps are conducted in a counter current extractor (10) including a rotary screw conveyor (12) mounted within an inclined or vertical elongate housing (11) such that the food material is fed into a lower end of the housing to contact the enriching solution which forms a pool at the lower end of the housing, the food material then being carried upward by the rotating screw to contact the extracting liquid which is fed into an upper end of the housing and flows downward under gravity.

2. A process according to claim 1 characterised in that the food material is a dried food material selected from coffee, tea, tobacco, almond hulls, vanilla and other dried flavour and fragrance materials.

3. A process according to claim 2 characterised in that the food material is subjected to a crushing or grinding step.

4. A process according to claim 1 characterised in that the extracting liquid is water and the enriching solution is an aqueous solution.

5. A process according to claim 1 characterised in that the ratio of extracting liquid to food material is in the range of approximately 1:10 to 10:1.

6. A process according to claim 1 characterised in that the food materials are dried and ground coffee beans and the enriching solution is an aqueous solution of coffee at a concentration of at least approximately 25°Brix.

7. A process according to claim 6 characterised in that the process is conducted at a temperature of at least approximately 50°C.

8. A process according to claim 6 characterised in that the ratio of coffee to extracting liquid is in the range of approximately 1:1 to 5:1.

9. A process according to claim 1, characterised in that the concentration of soluble solids in extracting liquid withdrawn from the counter current extractor is from approximately 25° to 40° Brix.

**Patentansprüche**

1. Verfahren zum Extrahieren einer löslichen Komponente aus einem Nahrungsmittel durch Bereitstellen eines zu extrahierenden Nahrungsmittels, einer Extraktionsflüssigkeit sowie einer anreichernden Lösung der zu extrahierenden löslichen Komponente, In-Kontakt-Bringen des Nahrungsmittels mit der anreichernden Lösung und In-Kontakt-Bringen des angereicherten Nahrungsmittels mit der Extraktionsflüssigkeit im Gegenstrom, dadurch gekennzeichnet, daß in der anreichernden Lösung der prozentuale Gewichtsanteil der löslichen Komponente größer ist, als der prozentuale Gewichtsanteil der löslichen Komponente im nicht-extrahierten Nahrungsmittel und die Kontaktierstufen in einem Gegenstromextraktor (10) durchgeführt werden, der einen Rotationsschraubenförderer (12) umfaßt, der innerhalb eines geneigten oder vertikalen verlängerten Gehäuses (11) angeordnet ist, so daß das Nahrungsmittel in das untere Ende des Gehäuses eingespeist wird, um die anreichernde Lösung in Kontakt zu bringen, die ein Bassin am unteren Ende des Gehäuses bildet, das Nahrungsmittel sodann nach oben durch die Rotationsschnecke gefördert wird, um die Extraktionsflüssigkeit zu kontaktieren, die in ein oberes Ende des Gehäuses eingespeist wird und unter Schwerkraft nach unten fließt.

2. Verfahren nach Anspruch 1, dadurch gekennzeichnet, daß das Nahrungsmittel ein getrocknetes Nahrungsmittel ist, ausgewählt aus Kaffee, Tee, Tabak, Mandelschalen, Vanille und anderen getrockneten Geschmacks- und Geruchsstoffmaterialien.

3. Verfahren nach Anspruch 2, dadurch gekennzeichnet, daß das Nahrungsmittel einer Zerkleinerungs- oder Vermahlungsstufe unterworfen wird.

4. Verfahren nach Anspruch 1, dadurch gekennzeichnet, daß die extrahierende Flüssigkeit Wasser und die anreichernde Lösung eine wäßrige Lösung ist.

5. Verfahren nach Anspruch 1, dadurch gekennzeichnet, daß das Verhältnis von extrahierender Flüssigkeit zu Nahrungsmittel im Bereich von etwa 1:10 bis 10:1 liegt.

6. Verfahren nach Anspruch 1, dadurch gekennzeichnet, daß das Nahrungsmittel getrocknete und gemahlene Kaffeebohnen ist und die anreichernde Lösung eine wäßrige Lösung von Kaffee in einer Konzentration von mindestens etwa 25° Brix ist.

7. Verfahren nach Anspruch 6, dadurch gekennzeichnet, daß das Verfahren bei einer Temperatur von mindestens etwa 50°C durchgeführt wird.

8. Verfahren nach Anspruch 6, dadurch gekennzeichnet, daß das Verhältnis von Kaffee zu extrahierender Flüssigkeit im Bereich von etwa 1:1 bis 5:1 liegt.

9. Verfahren nach Anspruch 1, dadurch gekennzeichnet, daß die Konzentration der löslichen Feststoffe der aus dem Gegenstromextraktor abgezogenen extrahierenden Flüssigkeit etwa 25° bis 40° Brix ist.

**Revendications**

1. Procédé pour l'extraction d'un composant soluble d'une matière alimentaire, lequel procédé consiste à;
   prévoir :

   une matière alimentaire à extraire;

   un liquide d'extraction; et

une solution d'enrichissement du composant soluble à extraire;

à mettre en contact la matière alimentaire avec la solution d'enrichissement; et

à mettre en contact la matière alimentaire enrichie avec le liquide d'extraction en écoulement à contre courant,

caractérisé en ce que, dans ladite solution d'enrichissement, le pourcentage pondéral du composant soluble est plus grand que le pourcentage pondéral du composant soluble dans la matière alimentaire non extraite et les étapes de mise en contact sont entreprises dans un extracteur à contre-courant (10) comprenant un convoyeur à vis rotative (12) monté dans un logement incliné ou vertical allongé (11) de manière que la matière alimentaire soit fournie dans une extrémité inférieure du logement pour contacter la solution d'enrichissement qui forme une masse à l'extrémité inférieure du logement, la matière alimentaire étant alors entraînée vers le haut par la vis en rotation pour contacter le liquide d'extraction qui est fourni dans une extrémité supérieure du logement et s'écoule vers le bas sous l'effet de la gravité.

2. Procédé selon la revendication 1 caractérisé en ce que la matière alimentaire est une matière alimentaire séchée sélectionnée parmi le café, le thé, le tabac, les coques d'amandes, la vanille et autre matière séchée d'aromatisation et de parfum.

3. Procédé selon la revendication 2 caractérisé en ce que la matière alimentaire est soumise à une étape d'écrasement ou de broyage.

4. Procédé selon la revendication 1 caractérisé en ce que le liquide d'extraction est de l'eau et la solution d'enrichissement est une solution aqueuse.

5. Procédé selon la revendication 1 caractérisé en ce que le rapport du liquide d'extraction à la matière alimentaire est compris entre environ 1:10 et 10:1.

6. Procédé selon la revendication 1 caractérisé en ce que les matières alimentaires sont des grains de café séchés et broyés et la solution d'enrichissement est une solution aqueuse de café à une concentration d'au moins environ 25°Brix.

7. Procédé selon la revendication 6 caractérisé en ce que le procédé est entrepris à une température d'au moins environ 50°C.

8. Procédé selon la revendication 6 caractérisé en ce que le rapport du café au liquide d'extraction est compris entre environ 1:1 et 5:1.

9. Procédé selon la revendication 1, caractérisé en ce que la concentration des solides solubles dans le liquide d'extraction retiré de l'extracteur à contre-courant est comprise entre environ 25° et 40° Brix.

FIG 1

FIG 2